# EUROPEAN PATENT SPECIFICATION

(11) **EP 2 720 940 B1**
(45) Date of publication and mention of the grant of the patent: **10.08.2016**
(21) Application number: 11867841.6
(22) Date of filing: 16.06.2011
(51) Int. Cl.: B64C 7/00, E04B 1/68, B64D 45/02

(54) **A DOUBLE-CURVED COVER FOR COVERING A GAP BETWEEN TWO STRUCTURAL PORTIONS OF AN AIRCRAFT**
ABDECKUNG MIT DOPPELTER KRÜMMUNG ZUM ABDECKEN EINES SPALTES ZWISCHEN ZWEI STRUKTURTEILEN EINES FLUGZEUGS
CAPOT À DOUBLE COURBURE POUR COUVRIR UN ESPACE ENTRE DEUX PARTIES STRUCTURELLES D'UN AÉRONEF

(43) Date of publication of application: 23.04.2014
(73) Proprietor: Saab AB, 581 88 Linköping (SE)
(72) Inventor: BJERKEMO, Jakob, S-582 53 Linköping (SE)
(74) Representative: Zacco Sweden AB
(86) International application number: PCT/SE2011/050762
(87) International publication number: WO 2012/173542

(56) References cited:
- EP-A1- 2 147 857
- WO-A2-2010/023475
- GB-A- 2 323 576
- US-A- 6 027 074
- US-A1- 2006 249 627
- US-B1- 6 170 781
- US-B1- 6 209 824
- US-B1- 6 450 457

## Description

### TECHNICAL FIELD

The present invention relates to a cover for covering a gap between a first structural portion and a second structural portion of an aerial vehicle, according to the preamble of claim 1.

### BACKGROUND ART

An aerial vehicle during flight generates radar echoes to a radar sensing threats who try to detect the vehicle. Such source for generating a radar echo could be a gap between a wing and the vehicle's movable control surface, such as an aileron surface, or a gap between the fuselage skin and a service hatch, etc. The aerial vehicle could be a military aircraft, a helicopter, an unmanned aerial vehicle, a missile etc. The modern aerial vehicle includes often double-curved outer surfaces or aerodynamic surfaces.

Efforts have been made for decreasing the detectability of such gaps by radar. US 5 695 154 describes a gap filler including a horizontal portion extending across the gap and vertical portions biased into frictional engagement with side walls of the gap, the material of the gap filler is made with electrical conductance for rendering the aircraft less detectable by radar and more capable of discharging lightning.

Another type of gap cover is disclosed in US 2006/0249627. The cover has a first attachment section and a second elastic section which covers the gap. The cover provides a biasing effect for producing a close fit between the movable control surface and the wing.

Another gap cover is disclosed by GB2323576 which shows all the features of the preamble of claim 1.

It is desirable to provide a cover for covering a gap between two surfaces of an aerial vehicle, wherein at least one of which comprises a double-curved form, the covering should be made with a close fit, even in a case where one of the surfaces is movable relative the other.

It is also desirable to provide a cover which is of low weight and which is cost effective to produce. It is also desirable to provide a cover that reduces the aerial vehicles vulnerability to radar sensing threats.

Furthermore, it is desirable to provide a cover that promotes the lightning protection of an aerial vehicle.

It is desirable to provide a cover for a gap between two double-curved aircraft skins, which cover serves as an aerodynamic surface.

An object is also to eliminate drawbacks of known techniques, develop them and improve the prior art covers for aerial vehicles.

### SUMMARY OF THE INVENTION

This has been solved by the cover as defined in the introduction and characterized by the features of claim 1.

Thereby is achieved that the cover will form a close fit onto the skin surface of the aerial vehicle. This is made by the intrinsic biasing force generated by the undulating shape when the flexible section is hold down towards the skin surface of the second structural portion. The hold down action is reached by an attachment of the cover to the first structural portion in a way so that the abutment portion springs against the second structural portion. This biasing force will prevail even if the second structural portion moves in a direction away from the cover, whereby the cover's abutment portion springs towards the second structural portion due to the undulating form and the flexible property of the flexible section including the abutment portion. Thereby, at the same time, is achieved that the cover provides a close fit also when the curvature of the surface of the second structural portion is double-curved. A plain prior art cover would not provide a close fit onto a double-curved skin. A positive effect of the close fit is that a radar sensing threat will have difficulty to detect the aerial vehicle (an aerial vehicle often has a plurality of double-curved surfaces) due to the proper covering of gaps. The desired biasing force can be achieved in direction and force by means of proper shaping of the undulating form. A smaller radius of the double-curvature in some cases requires larger amplitude of the waves and vice versa, etc. The cover is also cost-effective to produce due to its simplicity in design (sheet with undulated section) and provides a low weight, which is desirable for aerial vehicles.

Preferably, the first attachment section also includes an abutment portion having troughs and crests.

In such way the cover can be made as a removable service panel or hatch. This second abutment portion can have an undulated form or have a plain surface, depending upon the desire of having a biasing property of said abutment portion.

Suitably, each trough and crest of the abutment portion are of such curvature radius/radii and extension in said unloaded state that the abutment portion fully engages against the curvature of said second structural portion surface in the operating state.

Thereby is achieved that a close fit between the cover and the second structural portion is provided. By defining the amplitude and the wavelength of the waves of the cover in the unloaded state in regard to the curvature/-s of the double curved structural portion for achieving a smooth non-undulating abutment portion in the loaded state, the biasing property of the cover in the loaded state is determined. The biasing property of the cover is determined from the need for the abutment portion to always follow and provide a close fit with the movable second structural portion's surface (such as a control surface), particularly when the control surface is tilted in a direction away from the cover.

Preferably, the first attachment section of the cover is plain.

In such way is achieved that one portion of the cover can be fastened to a plain structural portion or single curved structural portion.

Suitably, a portion of the second flexible section forming an undulating shape includes wave ridges that are arranged in a fan-shaped manner.

In such way can be achieved that the first attachment section can be fastened smoothly to a plain surface of the first structural portion.

Preferably, the abutment portion includes a sharp edge for engagement with the structural surface portion in the operating state.

Thereby is achieved that the aerial vehicle is less detectable by radar. This is due to the lack of gaps and discontinuities in the aerial vehicle's outer surface. The sharp edge provides a minimal step for providing a smooth transition between a control surface and the cover.

Suitably, the gap is defined between a main surface and a control surface.

By means of the troughs of the cover provided for engagement with the surface of a control surface, such as a rudder, elevator, aileron etc., which troughs tend to be flattened out and propagate over the surface pressing down neighbouring crests of the cover towards the control surface to provide a close fit between the cover and the control surface. This pressing down tendency of the crests will by means of the propagating troughs produce a biasing or pre-load property within the cover in a self-contained manner. This biasing or pre-load property or intrinsic biasing effect will help the cover to produce a close fit even if the control surface turns in a direction away from a neutral position of the rudder, elevator, aileron, etc. This means that the cover's abutment portion (or end portion) always will press towards the control surface by the pre-load force of the cover, providing a close fit.

Preferably, the cover is designed as an access panel or opening or closing door..

In such way is provided a cover having a smooth fit relative the main surface of a double curved skin surface, which cover can be used as a hatch.

Suitably, the cover comprises a conductive material.

Thereby a reduced detectability by radar is achieved. This is due to the eliminating of the radar echo otherwise produced by the gap between the main surface (first structural object) and control surface and/or main surface and access panel surface. The electrical conductivity of the cover connects the first and second structural portions on opposite sides of the gap, thus decreasing the electrical discontinuities between two structural portions and making the aerial vehicle less detectable by radar. At the same time it is obtained that the structural portions are more capable of discharging lightning.

Preferably, the first attachment section is removable attachable to the first structural portion by means of a fastening element.

In such way it is quite simple and cost efficient to remove a defect or worn out cover from the structural portion and replace it. Preferably, the fastening means is arranged under the first attachment section of the cover, to be as smooth as possible from both aerodynamic and electromagnetic point of views.

### BRIEF DESCRIPTION OF THE DRAWINGS

The present invention will now be described by way of examples with references to the accompanying schematic drawings, of which:
FIGs. 1a-1c illustrate a first embodiment of a cover showing the achievement of a close fit;
FIG. 2 illustrates a second embodiment of a cover;
FIGs. 3a-3b illustrates the cover in FIGs. 1a-1c closer in detail;
FIGs. 4a-4d illustrates the cross-section A-A taken in FIG. 3a and achieved biasing effect;
FIGs. 5a-5b illustrate a cross-section B-B of a movable aileron mounted to a wing;
FIG. 5c illustrates the wing in FIGs. 5a-5b from behind;
FIGs. 6a-6b illustrate a fourth embodiment of a cover in the shape of a double-curved hatch or access panel;
FIG. 7 illustrates a first attachment section of a cover according to a fifth embodiment; and
FIGs. 8 and 9 illustrate two examples of aerial vehicles comprising different types of covers.

### DETAILED DESCRIPTION

Hereinafter, embodiments of the present invention will be described in detail with reference to the accompanying drawings, wherein for the sake of clarity and understanding of the invention some details of no importance are deleted from the drawings. Some details having the same reference could belong to different embodiments.

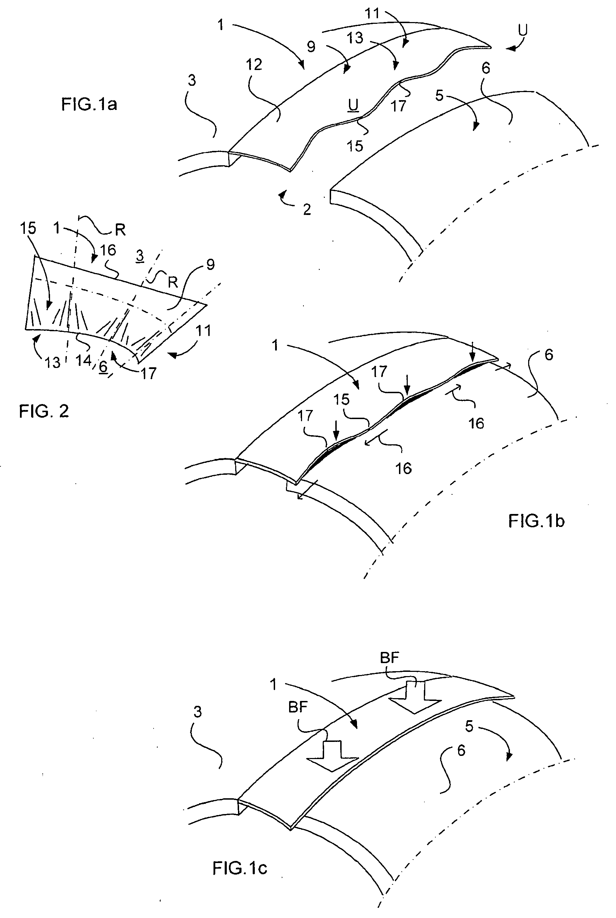

FIGs. 1a-1c schematically show a first embodiment of a cover 1 illustrating the principle of achieving a close fit between the cover 1 and a double-curved surface. FIG. 1a illustrates the cover 1 for covering a gap 2 between a wing skin 3 and a skin 5 of a movable elevator of an aircraft (not shown). The both skins and the cover 1 are made of fibre reinforced resin. The cover 1 includes a first attachment section 9 which can be fasten to the wing skin 3 by means of glue. The cover 1 further includes a flexible section 11 which is adapted to cover the gap 2. An abutment portion 13 of the flexible section 11 is adapted to abut against the skin 5 of the movable elevator when the aircraft operates. The abutment portion 13 forms in an unloaded state (FIG. 1a) an undulating shape U. The undulating shape U presents troughs 15 and crests 17, which extend along a double curved plane. This double curved plane has a curvature corresponding essentially with the curvature of the skin's 5 outer surface 6 within an area of the skin 5 corresponding with the abutment portion 13 during said operation. The troughs 15 are adapted for engagement with the outer surface 6 during the operation in a way such that they tend to flatten out and propagate over the outer surface 6 within the area of the skin 5 corresponding with the position of the abutment portion 13. As shown by FIG. 1b, when the mounting of the cover proceeds, the troughs 15 firstly will meet the outer surface 6, wherein the cover 1 tends to flatten out. As the trough 15 moves laterally (arrows 16) during the mounting, the crests 17 will be drawn or pressed down towards the outer surface 6 due to the stretching and the lateral movement of the troughs 15. In FIG. 1c is shown when the mounting is finished and the cover 1 provides a close fit against the outer surface 6. The outer surface 6 has a double curved curvature and the inner side of the cover 1 also presents a corresponding double curvature in FIG. 1c, when the cover 1 has been flatten out (spread out) over the outer surface 6. A biasing force BF generated by the press down action of the crests 17 of the undulating shape (i.e. the undulating shape predetermined for the cover 1 in the unloaded state) will provide a close fit of the cover 1 towards the surface 6. The force BF is created by the tendency of the troughs 15 to spread out over the outer surface 6 due to the double curved shape of the latter, The press down action of the crests 17 towards the outer surface 6 generates thus the biasing force BF.

FIG. 2 illustrates a second embodiment of a cover 1. A portion of the flexible section 11 forms an undulating shape in the unloaded state, includes wave ridges R that are arranged in a fan-shaped manner. In such way it is achieved that the first attachment section 9 can be fasten smoothly to a plain surface of the first structural portion, such as a wing skin 3. In an unloaded state, the abutment portion 13 of the cover 1 forms a single-curved plane. The wave ridges R are straight. The longitudinal edge 14 of the cover's 1 abutment portion 13, which edge 14 is the main edge meeting the outer surface 6 of the skin 5 of the movable elevator, will have the same length as the edge 16 of the attachment section 9 parallel with the edge 14. However, due to the undulating shape, the cover 1 being illustrated from above will be projected as it comprises a longer edge 16 of the attachment section 9 than the edge 14. The wave ridges R of the crests 17 and troughs 15 have such orientation within the cover 1 that they smoothly propagate over the double curved outer surface 6 when the cover 1 has been mounted onto the outer double curved surface 6 for reaching the operating state. The double curved curvature of the surface 6 generates a spreading out/propagating/flattening out effect onto the undulating shape by means of the wave ridges R of the troughs 15 meeting the surface 6. The wave ridges R propagate during said mounting until the stretched crests 17 reach the surface 6, whereby a biasing of the cover 1 is achieved due to the hold down force within the area of the first attachment section 9 and the stretched crests 17. The hold down force is achieved by the fastening of the attachment section 9 to the wing skin 3. The crests 17 are stretched towards the surface 6 due to the flattening out tendency (spreading out/propagating) of the troughs 15 meeting the surface 6.

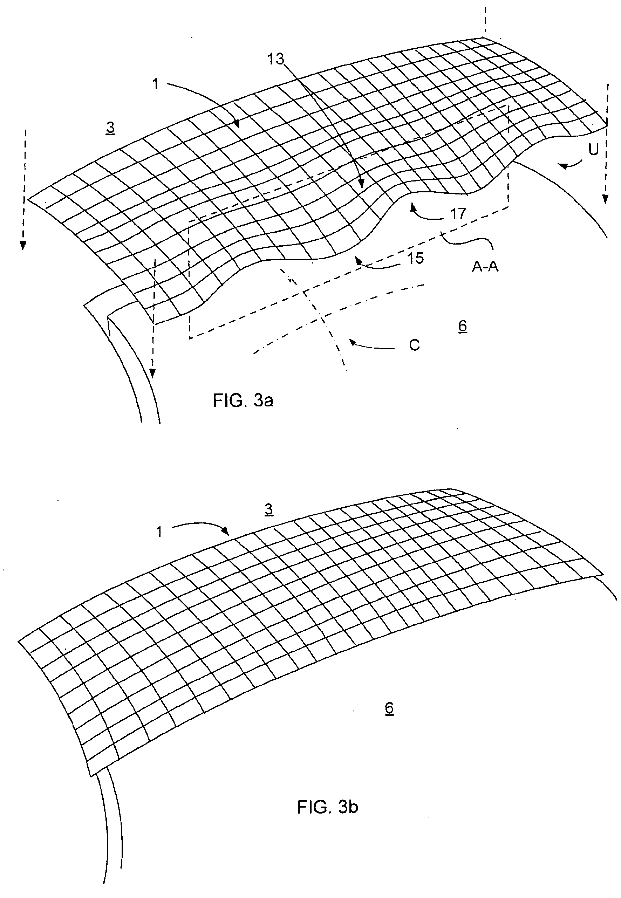

FIGs. 3a-3b illustrate the cover 1 in FIGs. 1a-1c closer in detail. Each trough 15 and crest 17 of the abutment portion 13 of the cover 1 are of such curvature radius/radii and extension in the unloaded state shown in FIG. 3a, that the abutment portion 13 fully engages against the double curved curvature C of the surface 6 in the operating state as shown in FIG. 3b. Thereby is achieved a close fit between the cover's 1 abutment portion 13 and the surface 6. By defining the amplitude and the wavelength of the undulating shape of the cover 1 in the unloaded state in regard to the curvature C of the double curved surface 6, the biasing property of the cover 1 in the loaded state can be determined. The biasing property of the cover 1 is preferably determined in a way to allow the abutment portion 13 to always follow, and provide a close fit towards, the moving surface 6. In FIG. 3a is taken a cross-section A-A through the undulating shape U in the direction orthogonally to the wave ridges extension and along the longitudinal direction of the cover 1.

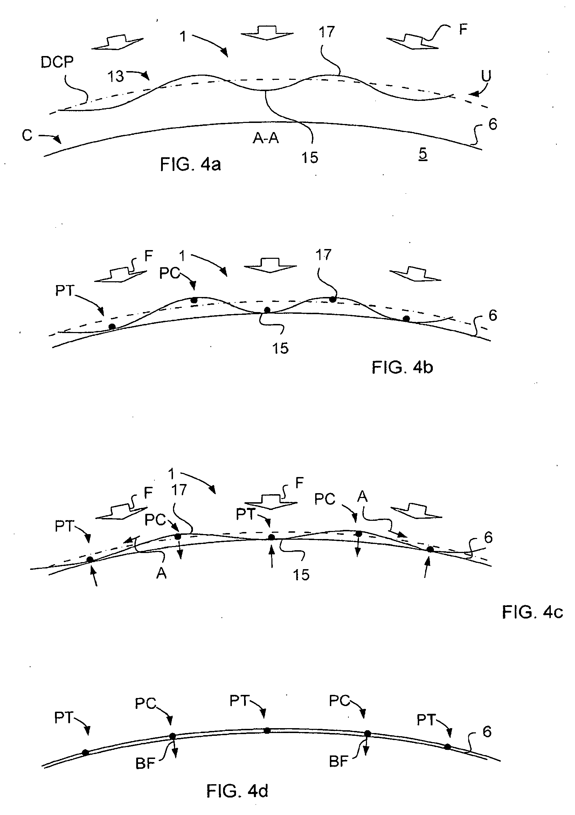

The cross-section A-A is schematically shown in FIG. 4a. In FIG: 4a is shown a mounting stage wherein service personnel (not shown) applies a force F onto the cover 1 in a direction towards a second structural portion 5 (surface 6) comprising the double-curved curvature C. In FIG. 4a is illustrated with a broken line a double curved plane DCP along which the undulating shape U of the cover extends in an unloaded state. The double curved plane DCP of the abutment portion 13 of the cover 1 corresponds to the double-curved curvature C of the surface 6. In FIG. 4b is schematically illustrated when the cover 1, during mounting, reach the surface 6. The troughs 15 and crests 17 of the undulating shape U are illustrated with filled points PT and PC respectively for illustrative clarity reason. Firstly, the troughs 15 come into contact with the surface 6. Thereafter, when the service personnel further forces the cover 1 towards the surface 6, the troughs 15 will slide outwardly as shown with arrows A, due to pressure with force F onto the crests 17, as shown in FIG. 4c. When the cover 1 is mounted to cover the gap (not shown), the troughs 15 are spread out over the surface 6 since they tend to flatten out and propagate over the surface 6 due to the surface's 6 double-curved curvature. In such way the tendency of the troughs 15 to move outwardly (or in any predetermined direction over the surface 6) when the cover has been mounted for reaching the operating state, will result in that the crests 17 will be pulled by the stretching troughs 15 in a direction towards the surface 6 as shown in FIG. 4d. The troughs 15 will thus by means of the spreading out effect press the neighbouring crests 17 towards the surface 6 for providing a close fit between the cover 1 and the surface 6, thereby providing an intrinsic biasing force property within the cover 1, directed in a direction perpendicular to the surface 6 due to the undulating shape of the abutment portion in the unloaded state. The biasing forces BF perpendicular directed towards the surface 6 is schematically illustrated in FIG. 4d.

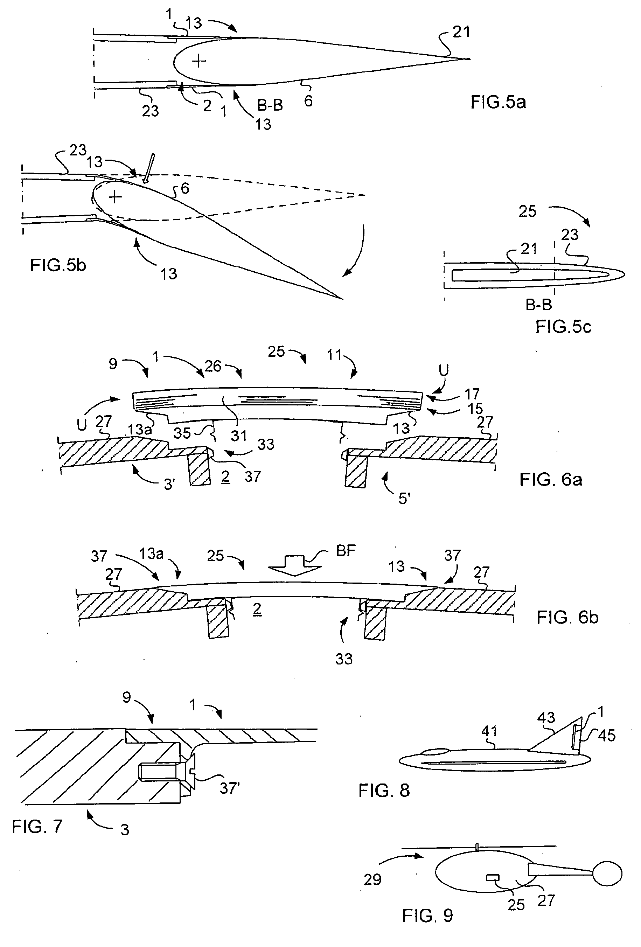

FIGs. 5a-5b schematically illustrate a cross-section B-B of an aileron 21 movable mounted to a wing 23. FIG. 5c illustrates the wing 23 in FIGs. 5a-5b from behind. In FIG. 5c is shown that the aileron 21 tapers with a curvature towards the wing tip 25 of the wing 23. By the cross-section B-B is shown that the aileron 21 has a curvature also transverse the tapering curvature in FIG. 5c, i.e. the aileron 21 comprises a double-curved curvature. Between a first structural portion (the wing 23) and the aileron 21 is formed a gap 2. Two covers 1 are mounted over the gap 2 on the underside and the upper side of the wing 23 respectively. The respective trough and crest (not shown) of the abutment portion 13 of the respective cover 1 are of such curvature radius/radii and extension in the unloaded state (not shown) that the abutment portion 13 fully engages against the double curved curvature of the aileron surface 6 in the operating state. Thereby is achieved a close fit between the cover 1 and the aileron 21. By defining the amplitude and the wavelength of the waves of the cover 1 in the unloaded state in regard to the curvature/-s of the double curved structural portion (aileron 21) for achieving a smooth non-undulating abutment portion in the loaded state, the biasing property of the cover 1 in the loaded state is determined. The biasing property of the cover 1 its determined from the need for the abutment portion to always follow and provide a close fit with the aileron 21. This is beneficially when the aileron surface 6 is tilted in a direction away from the cover 1 as being shown in FIG. 5b. The cover 1 will thus provide a close fit to the aileron surface 6 also when the aircraft operates.

FIGs. 6a-6b illustrate a fourth embodiment of a cover 1 in the shape of a double-curved hatch or access panel 25. According to this embodiment the first attachment section 9 of the hatch also includes an abutment portion 13a comprising an undulating shape U. The hatch 25 is made of a composite laminate sheet 26 including electrically conductive material. The hatch 25 is mountable to a fuselage skin 27 of a helicopter 29, shown in FIG. 9. The skin 27 of the helicopter has an electrically conductive property as well. Thereby is achieved that detection of the gap 2 by radar is hard to reach. This is due to the eliminating of the radar echo otherwise produced by the gap 2 between the fuselage skin 27 and a prior art hatch. The electrical conductivity of the hatch 25 connects the first and second structural portions 3', 5' of the fuselage skin 27 on opposite sides of the gap 2, thus decreasing the electrical discontinuities between the both structural portions 3', 5' and achieving the helicopter 29 less detectable by radar. At the same time is provided that the structural portions 3', 5' are more capable of discharging lightning. The composite laminate sheet 26 has an undulating shape U over its total surface. The FIG. 6a shows a cross-section of a double-curved hatch 25 in an unloaded state. The outermost wave 31, comprising a trough 15 and a crest 17, is shown in the FIG. 6a. Fastening elements 33, in the form of springs 35 and holding protrusions 37, are provided for fastening the hatch 25 to the fuselage skin 27, as shown in FIG. 9. In FIG. 6b is shown the operative state wherein service personnel (not shown) has mounted the hatch 25 over the gap 2. The undulating shape is now flatten out, and a biasing force BF is created in a way similar to what has been explained above. This intrinsic biasing force BF is generated by the undulating shape, when the abutment portions 13, 13a are held down towards the fuselage skin 27 by the fastening elements 33. A plain prior art hatch without any undulating shape could not provide a close fit onto a double-curved skin, but should wrinkle. A positive effect of the close fit and the smooth surface of the present hatch 25 is that a radar sensing threat would receive no radar echo from the gap 2. The intrinsic biasing force BF is determined in direction and force by means of properly shaping of the undulating form. In such way the hatch 25 can be made as a removable hatch. The abutment portion 13a includes a sharp thin edge 37 for engagement with the fuselage skin 27 in the operating state. By means of the sharp thin edge 37 smoothly engaging the fuselage skin 27 is achieved that the helicopter 29 is less detectable by radar.

FIG. 7 illustrates a first attachment section 9 of a cover 1 according to a fifth embodiment. The cover 1 is fastened removable to a first structural portion 3 by means of a screw 37'. By the location of the screw 37' beneath the cover 1, the aerodynamic properties will not be affected. The screw 37' is easy to reach sideways after lifting up of the cover 1.

FIGs. 8 illustrates an aircraft 41 comprising a fin 43 to which a rudder 45 is mounted. Two covers 1 (only one of which is shown) are arranged over a gap between the rudder 45 and the fin 43.

## Claims

1. A cover for covering a gap (2) between a first structural portion (3, 3') and a second structural portion (5, 5') of an aerial vehicle (29, 41), the cover (1, 25) comprises a first attachment section (9), attachable to the first structural portion (3, 3'), and a second flexible section (11) for covering the gap (2), the second flexible section (11) includes an abutment portion (13) for abutting against the second structural portion (5, 5') in an operating state, **characterized by that** the abutment portion (13) in an unloaded state forms an undulating shape (U) having troughs (15) and crests (17) extending along a curved plane, the curvature of which essentially corresponds with the curvature (C) of the second structural portion's (5, 5') surface (6, 27), wherein the troughs (15) are provided for engagement with said surface (6, 27) in said operating state in such way that they tend to be flatten out and propagate over said surface (6, 27) pressing down neighbouring crests (17) towards said surface (6, 27) for providing a close fit between the cover (1, 25) and the second structural portion (5, 5').

2. The cover according to claim 1, **wherein** the first attachment section (9) also includes an abutment portion (13a) having troughs (15) and crests (17).

3. The cover according to claim 1 or 2, **wherein** each trough (15) and crest (17) of the abutment portion (13, 13a) are of such curvature radius/radii and extension in said unloaded state that the abutment portion (13, 13a) fully engages against the curvature of said second structural portion surface (6, 27) in the operating state.

4. The cover according to any of claim 1 to 3, **wherein** the first attachment section (9) of the cover (1, 25) is plain.

5. The cover according to any of the preceding claims, **wherein** a portion of the second flexible section (11) forming an undulating shape (U) includes wave ridges (R) that are arranged in a fan-shaped manner.

6. The cover according to any of the preceding claims, **wherein** the abutment portion (13) includes a sharp edge (37) for engagement with the second structural portion surface (6, 27) in the operating state.

7. The cover according to any of the preceding claims, **wherein** the gap (2) is defined between a main surface (3) and a control surface.

8. The cover according to any of claim 1 to 6, **wherein** the cover is designed as an access panel (25) or opening or closing door.

9. The cover according to any of the preceding claims, **wherein** the cover (1, 25) comprises a conductive material.

10. The cover according to any of the preceding claims, **wherein** the first attachment section (9) is removable attachable to the first structural portion (9) by means of a fastening element (33, 37').

## Patentansprüche

1. Abdeckung zum Abdecken eines Spalts (2) zwischen einem ersten Strukturteil (3, 3') und einem zweiten Strukturteil (5, 5') eines Luftfahrzeugs (29, 41), wobei die Abdeckung (1, 25) einen ersten Befestigungsabschnitt (9), der an dem ersten Strukturteil (3, 3') befestigbar ist, und einen zweiten flexiblen Abschnitt (11) zum Abdecken des Spalts (2) aufweist, wobei der zweite flexible Abschnitt (11) einen Widerlagerbereich (13) zum Anliegen an dem zweiten Strukturteil (5, 5') in einem Betriebszustand aufweist,
**dadurch gekennzeichnet, dass**
der Widerlagerbereich (13) in einem unbelasteten Zustand eine gewellte Form (U) mit Vertiefungen (15) und Erhebungen (17) annimmt, die sich entlang einer gekrümmten Ebene erstrecken, deren Krümmung im Wesentlichen der Krümmung (C) der Oberfläche (6, 27) des zweiten Strukturteils (5, 5') entspricht, wobei die Vertiefungen (15) zum Eingriff mit der Oberfläche (6, 27) in dem Betriebszustand so vorgesehen sind, dass sie eine Tendenz zur Einebnung haben und sich über die Oberfläche (6, 7) ausbreiten und benachbarte Erhebungen (17) in Richtung zu der Oberfläche (6, 27) eindrücken, um eine gute Formanpassung zwischen der Abdeckung (1, 25) und dem zweiten Strukturteil (5, 5') zu erhalten.

2. Abdeckung nach Anspruch 1, wobei der erste Befestigungsabschnitt (9) auch einen Widerlagerbereich (13a) mit Vertiefungen (15) und Erhebungen (17) aufweist.

3. Abdeckung nach Anspruch 1 oder 2, wobei jede Vertiefung (15) und Erhebung (17) des Widerlagerbereichs (13, 13a) einen derartigen Krümmungsradius/derartige Radien und Erstreckung in dem belasteten Zustand haben, dass der Widerlagerbereich (13, 13a) vollständig mit der Krümmung der Oberfläche des zweiten Strukturteils (6, 27) in dem Betriebszustand in Kontakt ist.

4. Abdeckung nach einem der Ansprüche 1 bis 3, wobei der erste Befestigungsabschnitt (9) der Abdeckung (1, 25) eben ist.

5. Abdeckung nach einem der vorhergehenden Ansprüche, wobei ein Bereich des zweiten flexiblen Abschnitts (11), der eine gewellte Form (U) bildet, Wellenkanten (R) enthält, die in einer fächerförmigen Weise angeordnet sind.

6. Abdeckung nach einem der vorhergehenden Ansprüche, wobei der Widerlagerbereich (13) eine spitze Kante (37) zum Eingriff in die Oberfläche des zweiten Strukturteils (6, 27) in dem Betriebszustand hat.

7. Abdeckung nach einem der vorhergehenden Ansprüche, wobei der Spalt (2) zwischen einer Hauptfläche (3) und einer Steuerungsfläche ausgebildet ist.

8. Abdeckung nach einem der Ansprüche 1 bis 6, wobei die Abdeckung als eine Zugangsklappe (25) oder Öffnung oder schließenden Tür ausgebildet ist.

9. Abdeckung nach einem der vorhergehenden Ansprüche, wobei die Abdeckung (1, 25) ein leitendes Material aufweist.

10. Abdeckung nach einem der vorhergehenden Ansprüche, wobei der erste Befestigungsabschnitt (9) abnehmbar an dem ersten Strukturteil (9) mittels eines Befestigungselements (33, 37') befestigbar ist.

## Revendications

1. Capot pour recouvrir un espace (2) entre une première partie structurelle (3, 3') et une seconde partie structurelle (5, 5') d'un véhicule aérien (29, 41), le capot (1, 25) comprend une première section de fixation (9) pouvant être fixée à la première partie structurelle (3, 3') et une seconde section flexible (11) pour recouvrir l'espace (2), la seconde section flexible (11) comprend une partie de butée (13) pour venir en butée contre la seconde partie structurelle (5, 5') dans un état de fonctionnement, **caractérisé en ce que** la partie de butée (13), dans un état non chargé, forme une forme d'ondulation (U) ayant des creux (15) et des crêtes (17) s'étendant le long d'un plan incurvé, dont la courbure correspond essentiellement à la courbure (C) de la surface (6, 27) de la seconde partie structurelle (5, 5'), dans lequel les creux (15) sont prévus pour la mise en prise avec ladite surface (6, 27) dans ledit état de fonctionnement de sorte qu'ils ont tendance à être aplatis et à se propager sur ladite surface (6, 27) en comprimant les crêtes (17) voisines vers ladite surface (6, 27) pour fournir un ajustement serré entre le capot (1, 25) et la seconde partie structurelle (5, 5').

2. Capot selon la revendication 1, dans lequel la première section de fixation (9) comprend également une partie de butée (13a) ayant des creux (15) et des crêtes (17).

3. Capot selon la revendication 1 ou 2, dans lequel chaque creux (15) et chaque crête (17) de la partie de butée (13, 13a) a un rayon/des rayons de courbure et une extension dans ledit état non chargé, de sorte que la partie de butée (13, 13a) se met complètement en prise contre la courbure de la surface (6, 27) de ladite seconde partie structurelle à l'état de fonctionnement.

4. Capot selon l'une quelconque des revendications 1 à 3, dans lequel la première section de fixation (9) du capot (1, 25) est simple.

5. Capot selon l'une quelconque des revendications précédentes, dans lequel une partie de la seconde section flexible (11) formant une forme d'ondulation (U) comprend des crêtes d'onde (R) qui sont agencées à la manière d'un éventail.

6. Capot selon l'une quelconque des revendications précédentes, dans lequel la partie de butée (13) comprend un bord saillant (37) pour la mise en prise avec la surface (6, 27) de la seconde partie structurelle à l'état de fonctionnement.

7. Capot selon l'une quelconque des revendications précédentes, dans lequel l'espace (2) est défini entre une surface principale (3) et une surface de contrôle.

8. Capot selon l'une quelconque des revendications 1 à 6, dans lequel le capot est conçu comme un panneau d'accès (25) ou une porte d'ouverture ou de fermeture.

9. Capot selon l'une quelconque des revendications précédentes, dans lequel le capot (1, 25) comprend un matériau conducteur.

10. Capot selon l'une quelconque des revendications précédentes, dans lequel la première section de fixation (9) peut être fixée de manière amovible à la première partie structurelle (9) au moyen d'un élément de fixation (33, 37').
